# EUROPÄISCHE PATENTSCHRIFT

(11) **EP 2 987 772 B1**
(45) Veröffentlichungstag und Bekanntmachung des Hinweises auf die Patenterteilung: **17.07.2019**
(21) Anmeldenummer: 15181493.6
(22) Anmeldetag: 19.08.2015
(51) Int. Cl.: C02F 1/04, C02F 101/16

(54) **VERFAHREN ZUR ABTRENNUNG VON STICKSTOFFREICHEN UND STICKSTOFFARMEN KONDENSATFRAKTIONEN AUS WÄSSERN UND SCHLÄMMEN UND HERSTELLUNG EINES FESTEN STICKSTOFFKONZENTRATS**
METHOD FOR SEPARATING NITROGEN-RICH AND NITROGEN POOR CONDENSATE FRACTIONS FROM WATER AND SLUDGES AND PRODUCTION OF A SOLID NITROGEN CONCENTRATE
PROCEDE DE SEPARATION DE FRACTIONS DE CONDENSAT RICHES ET PAUVRES EN AZOTE, A PARTIR D'EAUX ET DE BOUES ET PRODUCTION D'UN CONCENTRÉ SOLIDE D'AZOTE

(30) Priorität: 19.08.2014 DE 102014111821
(43) Veröffentlichungstag der Anmeldung: 24.02.2016
(73) Patentinhaber: Gottfried Wilhelm Leibniz Universität Hannover, 30167 Hannover (DE)
(72) Erfinder: Rosenwinkel, Karl Heinz, 30539 Hannover (DE); Weichgrebe, Dirk, 31848 Bad Münder (DE); Stopp, Paul, 30880 Laatzen (DE); Voss, Erwin, 31628 Landesbergen (DE)
(74) Vertreter: Kröncke, Rolf

(56) Entgegenhaltungen:
- WO-A1-97/10884
- WO-A1-2005/028382
- JP-A- 2009 126 744
- JP-B2- 3 184 996
- Masaru Yamaoka ET AL: "Separation of Ammonia from Methane Fermented Liquid Supernatant and Concentration of the Supernatant by Vacuum Distillation", Transactions of The Japanese Society of Irrigation, Drainage and Rural Engineering (JSIDRE), 1 August 2007 (2007-08-01), pages 47-55, XP055508902, Retrieved from the Internet: URL:https://www.jstage.jst.go.jp/article/j sidre2007/2007/250/2007_250_393/_pdf/-char /en [retrieved on 2018-09-21]

## Beschreibung

Die vorliegende Erfindung betrifft ein Verfahren zur Herstellung eines festen Stickstoffkonzentrats nach Anspruch 1 mit der Abtrennung von stickstoffreichen Kondensatfraktionen aus stickstoffhaltigen Wässern und Schlämmen, wobei diese Wässer und Schlämme einer Eindampfung unterworfen werden. Die Eindampfung erfolgt derart, dass mindestens ein stickstoffreiches und mindestens ein stickstoffarmes Kondensat fraktioniert werden.

### Stand der Technik

Die Aufbereitung von stickstoffhaltigen Wässern und Schlämmen ergibt sich zum Beispiel im Bereich der anaeroben Vergärungsanlagen mit dem Zweck der Biogaserzeugung, der Verwertung von Bioabfällen oder der Abfallbehandlung. Solche stickstoffhaltigen Wässer und Schlämme umfassen Gärreste, Gülle, Klärschlämme, Sickerwässer oder Prozesswässer. Diese stickstoffbeladenen oder hier auch als stickstoffhaltige Wässer und Schlämme bezeichneten Wässer und Schlämme entstehen im Rahmen der oben genannten Verfahren, im Rahmen der Abfallbehandlung usw.

Solche stickstoffhaltigen Wässer und Schlämme fallen in großem Umfang an. Eine Lagerung solcher Wässer und Schlämme ist aus ökonomischer Sicht nicht sinnvoll aber z.T. gesetzlich vorgeschrieben. Üblicherweise wird versucht durch Eindampfungsprozesse diese stickstoffhaltigen Wässer einzuengen. Bekannt sind hierbei solche Eindampfungsprozesse die ein stickstoffreiches Kondensat als Flüssigphase und ein stickstoffarmes und üblicherweise phosphatreiches Konzentrat in der Feststoffphase herstellen. Das heißt, eine Eindampfung dieser stickstoffhaltigen Wässer, in Form von z. B. Gärresten oder Gülle, erfolgt zum Zweck der Volumenreduktion, um die Kosten der gesetzlich vorgeschriebenen Lagerung, der Behandlung und des Transports zu vermindern. Tatsächlich stellen solche stickstoffhaltigen Wässer ein großes Problem dar, da sie nicht unbegrenzt abgegeben werden können, z. B. landwirtschaftlich genutzt werden können, aufgrund von Beschränkungen durch entsprechende Verordnungen, wie in Deutschland der Düngeverordnung.

Im Rahmen des Eindampfungsprozesses für stickstoffhaltige Wässer mit dem Ergebnis von stickstoffreichen Kondensat und stickstoffarmen Konzentrat erfordert das stickstoffreiche Kondensat eine weitere Behandlung, um entweder den Stickstoff zu eliminieren oder auf zu konzentrieren. Beides sind kosten- und energieintensive Verfahren. Bei Vergärungsanlagen mit einer Biogas- oder einer Klärgasnutzung zur Stromerzeugung wird meist die Abwärme der Verstromungsaggregate zur Verdunstung des Wassers genutzt. Dabei kann das Volumen deutlich reduziert werden. Es entsteht ein Kondensat, das mit flüchtigen organischen Verbindungen und deutlich mit Stickstoff beladen ist, üblicherweise ca. 75 % an Gesamtstickstoff der Wässer.

Wie ausgeführt, können diese stickstoffreichen Kondensate aber nicht einfach entsorgt oder verwertet werden sondern müssen weiter aufgearbeitet werden.

Alternativ wurden hierzu Eindampfungsprozesse für stickstoffhaltige Wässer entwickelt, die mit Einsatz von pH-Wert verändernden Mitteln, wie Säuren, ein stickstoffarmes Kondensat und ein stickstoffreiches Konzentrat herstellen. Bei dieser sauren Eindampfung reichert sich der Stickstoff als Konzentrat an, solche Stickstoffkonzentrate erfordern aber eine weitere Bearbeitung insbesondere erfordern sie eine Neutralisierung der vorher angesäuerten Wässer. Hierbei sind sowohl große Mengen Säure zum Ansäuern als auch große Mengen Basen zur Neutralisation notwendig; beides sind kosten- und ressourcenintensive Schritte die einer ökonomischen Verwertung entgegenstehen. Zwar erhält man hier ein weitgehend stickstofffreies Kondensat, das stickstoffhaltige Konzentrat erfordert aber eine umfangreiche Nachbehandlung.

Es finden sich verschiedene Vorschläge zur Aufbereitung von Gärresten, so beschreibt die DE 10 2005 055 310 A1 ein komplexes System mit verschiedenen Behandlungsstufen in anaeroben und aeroben Bereichen wobei Mineralsalze zugefügt werden etc. Die DE 10 2007 004 892 A1 betrifft Verfahren und Vorrichtungen zur Aufbereitung organischer Reststoffe aus Biogasanlagen, wobei Klärreste mechanisch aufbereitet werden einschließlich einer Eindickung. Aus der DE 10 2012 106 610 A1 ist ein anderer Ansatz zur Herstellung von Dünger aus Gärresten beschrieben, dabei werden diese Gärreste verkapselt, um entsprechende Langzeitdünger bereitzustellen. Aus der DE 10 2009 027 274 A1 ist ein chemisch physikalisches Verfahren zur Weiterverarbeitung von Gärresten aus Biogasanlagen zu Düngemitteln und Einrichtungen zur Realisierung dieser Verfahren bekannt. Dort werden die Kondensate bzw. die stickstoffhaltigen Wässer angesäuert.

JP 2009126744 beschreibt ein Verfahren und eine Vorrichtung zur Aufbereitung von stickstoffhaltigen Schlämmen und Wässern. Masaru Yamaoka et al.; Transactions of the Japanese Society of Irrigation, Drainage and Rural Engineering (JSIDRE), 1. August 2017, Seiten 47-55, beschreibt ein Verfahren zur Aufbereitung von Abwässern und Trennung von stickstoffreichen und stickstoffarmen Fraktionen.

Die bisherigen Eindampfungsansätze, wie sie oben beschrieben sind, sind aufgrund der aufgezeigten Nachteile wenig praxisrelevant, daher kommen derzeit energieaufwendigere und teure Verfahren zwangsläufig zum Einsatz, wie Belebungsverfahren, Membranverfahren und mechanische Separation.

Aufgabe der folgenden Erfindung ist die Bereitstellung von Verfahren, zur Herstellung eines festen Stickstoffkonzentrats mit einem einfachen Abtrennen von stickstoffreichen Fraktionen aus stickstoffhaltigen Wässern und Schlämmen. Ein solches Verfahren erfolgt ohne Zugabe von Säuren oder Basen erfolgen, um das Verfahren kommerziell interessant zu halten. Zusätzlich soll das Verfahren erlauben Kondensate und Konzentrate bereitzustellen, die nicht unter gesetzliche Beschränkungen fallen und einfach entsorgt werden können.

### Beschreibung der Erfindung

In einem ersten Aspekt wird zur Lösung der oben genannten Probleme ein Verfahren zur Aufarbeitung von stickstoffhaltigen Wässern und Schlämmen bereitgestellt. Dieses Verfahren ist ein Verfahren zur Herstellung eines festen Stickstoffkonzentrats mit einer Abtrennung von stickstoffreichen Kondensatfraktionen aus stickstoffhaltigen Wässern und Schlämmen, wobei diese Wässer und Schlämme einer Eindampfung unterworfen werden, wobei das Kondensat dieser Eindampfung während der Eindampfung in mindestens ein stickstoffreiches und mindestens ein stickstoffarmes Kondensat fraktioniert wird nach Anspruch 1.

Soweit nicht anders ausgeführt umfassen stickstoffhaltige Wässer auch entsprechende stickstoffhaltige Schlämme.

Vorliegend wird unter dem Ausdruck "Stickstoff" jegliche Form von Stickstoff enthaltene Verbindungen verstanden, einschließlich Ammoniumsalze und Ammoniak. Stickstoffhaltige Wässer und Schlämme sind insbesondere ammoniumhaltige Wässer und Schlämme.

Die Eindampfung der stickstoffhaltigen Wässer erfolgt in mehreren Sequenzen.

Bei diesen Sequenzen handelt es sich um Teilschritte der Eindampfung, die entweder zeitlich oder räumlich getrennt erfolgen können. Aus einer Sequenz können dabei mehrere Fraktionen, stickstoffreich oder stickstoffarm, erhalten werden. Ergebnis einer sequentiellen Eindampfung sind die Ausbildungen von mindestens zwei Fraktionen des Kondensates, nämlich einer stickstoffreichen Fraktion und einer stickstoffarmen Fraktion. Das heißt, erfindungsgemäß werden mehrere Kondensatfraktionen während des Eindampfens erzeugt, wobei mindestens eine hiervon ein stickstoffreiches und mindestens eine weitere ein stickstoffarmes Kondensat ist. Es zeigte sich, dass durch die Erzeugung von mehreren Kondensatfraktionen die Ausbildung von stickstoffreichen Kondensatfraktionen und stickstoffarmen Kondensatfraktionen möglich ist. Dadurch kann das Volumen an stickstoffreichem Kondensat erheblich verringert werden. Die Reduktion der gesamten Masse von stickstoffhaltigem Wässern ist möglich, die notwendigen Lagerkapazitäten für diese stickstoffhaltigen Wässer in Form der stickstoffreichen Kondensate ist reduziert, dieses trägt auch gleichzeitig zur Kostenreduktion bei, und eine Nutzung dieser stickstoffreichen Kondensate zur Aufarbeitung zu Düngern ist möglich.

Die Unterteilung des Eindampfungsprozesses in z. B. zwei Sequenzen führt zur Bildung von z. B. mindestens zwei Fraktionen, einer stark mit Stickstoff beladenen Fraktion bzw. Kondensatfraktion (stickstoffreiche Kondensatfraktion) und zur Bildung einer gering mit Stickstoff beladenen Kondensatfraktion (stickstoffarmen Kondensatfraktion). Das bei der Verdampfung verbleibende Konzentrat ist ebenfalls deutlich in seiner Stickstofffracht reduziert.

Die stickstoffreiche Kondensatfraktion ist die Fraktion bzw. die Fraktionen, die zuerst bei der Eindampfung entstehen, also üblicherweise mindestens in der ersten Sequenz.

Das stickstoffreiche Kondensat ist maximal ein Drittel des Gesamtkondensatvolumens gebildet während des Eindampfungsprozesses. Das stickstoffreiche Kondensat ist das gebildet aus dem maximal ersten Drittel des gesamten Kondensatvolumens.

Bei den stickstoffhaltigen Wässern und Schlämmen handelt es sich insbesondere um solche aus Gärresten, Güllen, Klärschlämmen, Sicker- oder Prozesswässern, insbesondere Gärresten aus Biogas-, Schlammfaulungs-, oder Vergärungsanlagen sowie Güllelägern.

Das heißt, es geht vorliegend insbesondere um die Aufarbeitung der bei anaeroben Prozessen entstehenden Gärreste, wobei die entstehenden Kondensate und Konzentrate entsprechend regelkonform und bedarfsgerecht einer Verwertung z. B. in der Landwirtschaft bzw. einer Entsorgung zugeführt werden.

Das erfindungsgemäße Verfahren kann dabei derart durchgeführt werden, dass der Gehalt an Stickstoff im Kondensat während des Eindampfens kontinuierlich oder diskontinuierlich bestimmt wird. Eine solche Bestimmung kann zur Steuerung der Fraktionierung des Kondensates in stickstoffreiche Kondensatfraktionen und stickstoffarme Kondensatfraktionen durchgeführt werden.

In einer Ausführungsform kann die Fraktionierung des Kondensats beim Eindampfen zeitgesteuert und/oder temperaturgesteuert erfolgen. Alternativ kann die Fraktionierung auf Basis des kontinuierlich oder diskontinuierlich bestimmten Gehalts an Stickstoff im Kondensat erfolgen.

In einer Ausführungsform kann dabei der Dampf vor der Kondensation durch eine Membran geführt werden, Transmembrandestillation. Dadurch kann eine weitere Abtrennung von gewünschten Bestandteilen, wie Salze oder Wasser, erfolgen.

Das erfindungsgemäße Verfahren ist eines, bei dem den stickstoffhaltigen Wässern vor dem Verdampfen keine Säuren und/oder Laugen hinzugefügt werden. Das heißt, das erfindungsgemäße Verfahren ist in einer Ausführungsform eines, dass dadurch kostengünstig durchgeführt werden kann, das keine zusätzlichen Kosten durch Ansäuern und anschließendes Neutralisieren des durch das saure Eindampfen erhaltenen Kondensate erfolgt. Nicht nur ökonomische Vorteile sondern auch Vorteile in Bezug auf die anfallende Menge an Kondensat und eine Verringerung der Umweltbelastung kann hierdurch erreicht werden.

Das erfindungsgemäße Verfahren kann dabei unter Umgebungsdruck aber auch unter Unter- oder Überdruck durchgeführt werden, je nach Anforderung und Aufbau der entsprechenden Einrichtung.

Eine Umsetzung des Verfahrens ist dabei wie folgt möglich: Eine sequentielle Eindampfung kann in einer Vorrichtung durch Batchbetrieb erreicht werden. Eine sequentielle Eindampfung kann in einer Vorrichtung durch zeitliche Begrenzung der Eindampfung erfolgen. Die sequentielle Eindampfung kann in einer Vorrichtung durch räumliche Trennung der Kondensatfraktion entsprechend der vorgegebenen Sequenzen erfolgen. Diese kann zeitlich oder Temperatur gesteuert erfolgen. Weiterhin kann dieses durch eine räumliche Trennung erfolgen. Die sequentielle Eindampfung kann z.B. in zwei getrennten Vorrichtungen erfolgen, deren Verweilzeit auf die entsprechenden Sequenzen bzw. auf die Kondensat- und Konzentratfraktion abgestimmt ist.

Aufgrund der gesteuerten bzw. geregelten Kondensatfraktionierung ist es möglich, stickstoffreiche Kondensatfraktionen zu erzielen, deren Volumen deutlich verringert sind. Es wird eine mindestens zweite Kondensatfraktion erzielt, deren Stickstoffgehalt ist im Vergleich zum stickstoffreichen Kondensat und den stickstoffhaltigen Wässern deutlich verringert.

Diese Stickstoff reduzierte Kondensatfraktion kann anschließend ohne weitere Aufarbeitung Gewässern zugefügt oder zur Bewässerung eingesetzt werden. Gegebenenfalls kann diese stickstoffreduzierte Kondensatfraktion auch nachbereitenden Schritten entsprechend der gewünschten Nutzung unterworfen werden.

Das stickstoffreduzierte Konzentrat, das reich an anderen Nährstoffen sein kann, z. B. als Kohlenstoffquelle, kann zur Humusbildung oder als Phosphorquelle mit dem erfindungsgemäßen erhaltenen und gegebenenfalls weiter aufgearbeiteten stickstoffreichen Kondensat zusammengeführt und gegebenenfalls unter Anreicherung mit weiteren Nährstoffen zu einem Volldünger weiterverarbeitet werden.

In einer Ausführungsform ist das Verfahren eines, wobei die stickstoffhaltigen Wässer und Schlämme Gärreste aus der anaeroben Vergärung z. B. aus Biogasanlagen sind und die Eindampfung in mindestens zwei Sequenzen erfolgt.

Das erfindungsgemäße Verfahren ermöglicht eine Kosten- und Energieeinsparung bei der Eindampfung von stickstoffhaltigen Wässern. Weiterhin können Verbesserungen gegenüber dem Stand der Technik aufgezeigt werden, nämlich durch Vermeidung von Säuren und Basen, der Erzeugung von Kondensat mit hohen Stickstoffgehalt zur stofflichen Verwertung oder Vermarktung sowie die Auftrennung in Konzentrat und stickstoffarmen Kondensat, bei denen eine Weiterbehandlung gegebenenfalls nicht erforderlich ist und die einfach verwertet oder entsorgt werden können.

Das erfindungsgemäße Verfahren eignet sich im Wesentlichen für alle stickstoffhaltigen Wässer. Mit Hilfe des erfindungsgemäßen Verfahrens können die zu lagernden Volumen von Gärresten deutlich verringert werden, gleiches gilt für die Stickstoffkonzentration im Konzentrat. Hierdurch können Lagerkosten gesenkt und größere Volumina am Kondensat und Konzentrat ohne Überschreitung der Grenzwerte für Stickstoff nach z. B. der Düngeverordnung ausgebracht werden. Die stickstoffreiche Fraktion selbst kann einer Weiterbehandlung zugefügt werden, z. B. der Weiterbearbeitung zu Stickstoffdünger.

Vorliegend wird weiterhin eine Vorrichtung zur Aufarbeitung stickstoffhaltiger Wässer mit einer Einrichtung zum Eindampfen dieser stickstoffhaltigen Wässer, wobei diese Vorrichtung zum Eindampfen ausgebildet ist zur Fraktionierung des beim Eindampfen auftretenden Kondensates beschrieben. Die Einrichtung kann dabei Teil einer Anordnung, z. B. einer Biogasanlage sein. In einer Ausführungsform ist die Einrichtung eine, die weiterhin eine Mess- und Regeleinheit aufweist, wobei die Messeinheit insbesondere ausgebildet ist zur Bestimmung des Gehalts an Stickstoff, zur Bestimmung des pH-Wertes und/oder der Temperatur des Kondensats. Eine entspreche Messung kann dabei kontinuierlich oder diskontinuierlich während des Eindampfens erfolgen. Die Mess- und Regeleinheit kann dabei weiter Aktoren umfassen, die entsprechend die Fraktionierung des Kondensates regeln.

Die Einrichtung kann weitere Vorrichtungen zur Nachbearbeitung von sowohl dem erhaltenem Kondensaten als auch den erhaltenen Konzentraten aufweisen.

Weiterhin werden mit dem Verfahren erhältliche stickstoffreichen Kondensatfraktionen beschrieben. Diese so erhältlichen stickstoffreichen Kondensatfraktionen mit ihrem hohen Stickstoffgehalt eignen sich zur Weiterverarbeitung insbesondere zur Weiterverarbeitung zu Düngern, wie Volldünger. Diese Fraktionen zeichnen sich dadurch aus, dass sie keine Säuren und keine Salze durch Neutralisation bei saurem Aufschluss enthalten. Diese stickstoffreiche Fraktion weist mindestens 50%, wie mindestens 60%, zum Beispiel mindestens 70% Stickstoffe der Ausgangswässer auf.

Schließlich beschreibt die vorliegende Anmeldung ein Verfahren zur Herstellung von stickstoffhaltigen Düngern umfassend die Anreicherung von stickstoffreichen Kondensatfraktionen aus stickstoffhaltigen Wässern und/oder unter der Verwendung der stickstoffreichen Kondensatfraktionen.

Das Verfahren umfasst dabei in einer Ausführungsform die Zugabe von stickstoffreduziertem Konzentrat, insbesondere Konzentrat erhalten gemäß dem erfindungsgemäßen Verfahren. Diese stickstoffreduzierten Konzentrate weisen dabei erhöhte Gehalte an Kohlenstoffen aber auch Phosphaten auf. Das Verfahren kann weiterhin eine Anreicherung mit weiteren Nährstoffen umfassen, um einen entsprechenden Dünger zu erhalten.

Die vorliegende Erfindung beschreibt ein Verfahren zum Erhalt eines Stickstoffkonzentrats umfassend ein Verfahren zum Abtrennen von stickstoffreichen Kondensatfraktionen aus stickstoffhaltigen Wässern gemäß dem erfindungsgemäßen Verfahren und Behandeln der erhaltenen stickstoffreichen Kondensatfraktionen mittels Membranverfahren zum Erhalt eines festen Stickstoffkonzentrats. Unter Bezugnahme auf die Abbildungen werden die Verfahrensschritte näher erläutert.

Die Abbildungen stellen dar:
Abbildung 1: Abbildung 1 zeigt ein Verfahren gemäß dem Stand der Technik.
Abbildung 2: Abbildung 2 zeigt die Schritte des Verfahrens zur sequentiellen Eindampfung gemäß dem erfindungsgemäßen Verfahren.
Abbildung 3: Abbildung 3 zeigt das erfindungsgemäße Verfahren und die Verteilung des Stickstoffes.
Abbildung 4: Abbildung 4 ist die Darstellung des Anteils des Gesamtstickstoffs in der jeweiligen Kondensatfraktion.

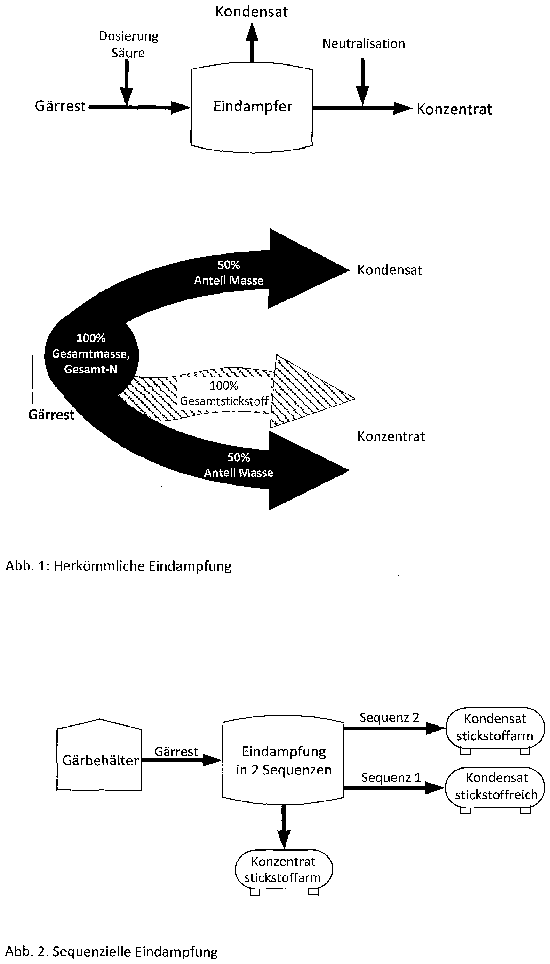

In der Abbildung 1 wird in der oberen Abbildung eine saure Eindampfung gemäß dem Stand der Technik dargestellt. Dem Gärrest wird vor dem Eindampfen eine Säure zudosiert, um ein saures Ausfällen zu erreichen. Anschließend erfolgt ein Eindampfen zum Erhalt eines Kondensats und eines Konzentrats, wobei das Konzentrat stickstoffangereichert ist. Dieses Konzentrat muss nach der Eindampfung mit entsprechender Base neutralisiert werden. In der unteren Abbildung sind Massen- und Stickstoffbilanzen dargestellt. Wie erkennbar geht der Stickstoff in das Konzentrat, während sich die gesamte Masse zu 50 % auf das Konzentrat und das Kondensat verteilt.

In der Abbildung 2 ist schematisch ein Teil des das erfindungsgemäßen Verfahrens mit einem Eindampfer dargestellt. Die Gärreste werden aus dem Gärbehälter der Eindampfung zugeführt, wobei die Eindampfung als Anwendungsbeispiel in zwei Sequenzen erfolgt. In der Sequenz 1 wird ein stickstoffreiches Kondensat erhalten in der Sequenz 2 ein stickstoffarmes; weiterhin wird ein Konzentrat erhalten.

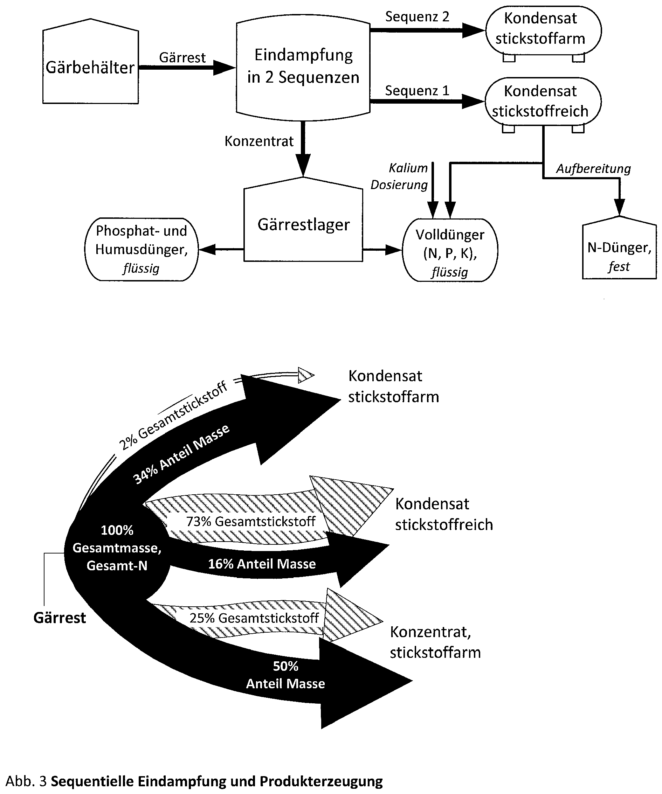

Abbildung 3 zeigt ein weiteres Anwendungsbeispiel eines Teils des erfindungsgemäßen Verfahrens. Zusätzlich zu der Darstellung in der Abbildung zwei sind die weiteren Aufbereitungsschritte der einzelnen Fraktionen dargestellt, nämlich die Schritte zum stickstoffreichen Kondensat und dem Konzentrat. Das stickstoffreiche Kondensat kann zu Stickstoff- oder Volldünger weiterverarbeitet werden, das Konzentrat kann zu Volldünger oder Phosphat- oder Humusdünger in fester oder flüssiger Form weiterverarbeitet werden.

Auf der rechten Seite sind wieder die Massen- und Stickstoffströme des schematisch dargestellten Prozesses dargestellt. Deutlich zu erkennen ist, dass der überwiegende Anteil an Stickstoff im Gärrest in das stickstoffreiche Kondensat geht, 16 % (ca. 1/6) der Gesamtmasse gegenüber 73 % (ca. ¾) des Gesamtstickstoffs. Im stickstoffarmen Kondensat finden sich lediglich noch ein kleiner Rest, hier 2 %, des Gesamtstickstoffgehaltes bei 34 % (ca. 1/3) der Gesamtmasse. Im Konzentrat findet ebenfalls eine deutliche Abreicherung des Stickstoffs statt.

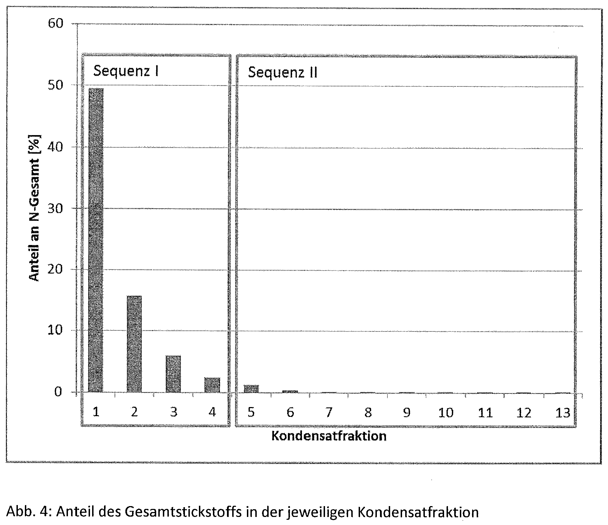

In der Abbildung 4 ist beispielhaft ein fraktioniertes Kondensat dargestellt. Dargestellt ist der Stickstoffanteil aufeinander folgenden Kondensatfraktionen bei Durchführung des beschriebenen Verfahrens. Unterteilt sind die Kondensatfraktionen in eine Sequenz eins und in eine Sequenz zwei, die entsprechend die stickstoffreiche Kondensatfraktion und die stickstoffarme Kondensatfraktion darstellten. Deutlich wird die Anreicherung des Stickstoffs in der Sequenz eins in der sich schließlich ca. 75 % (ca. 3/4) des ursprünglichen Gesamtstickstoffs befindet.

Das beschriebene Verfahren erlaubt somit die Behandlung von Gärresten aus z. B. bestehenden Biogas-, Schlammfaulungs- oder Vergärungsanlagen sowie Güllelägern aber auch aus Güllen, Schlammwässern oder Prozesswässern.Die Lagerung bezogen auf Gärresten ist ein bedeutender Kostenfaktor für anaerobe Vergärungsanlagen. Durch Anwendung des Verfahrens werden das Volumen von Gärresten und die Stickstoffkonzentration im Konzentrat deutlich reduziert. Durch die Volumenreduktion werden die Lagerkosten direkt gesenkt, durch die N-Reduktion wird die Ausbildung größerer Volumina ohne Überschreitung der Grenzwerte für Stickstoff, z. B. nach der Düngeverordnung, ermöglicht, so dass die Lagerkosten weiter sinken können bzw. ein höheres Substratrücksatz für die Anlage ermöglicht wird.

Durch die Unterteilung in stickstoffarme und stickstoffreiche Fraktionen können diese jeweils einer unterschiedlichen Verwertung zugeführt werden. Während die stickstoffarme Fraktion kostengünstig gegebenenfalls auch kostenfrei unabhängig von der Sperrfrist der Düngeverordnung abgeführt werden kann und auch die Hygienesierung einfach erfolgen kann, kann eine stickstoffreiche Fraktion als Stickstoffdünger oder nach Weiterverarbeitung als Volldünger vermarktet werden. Beide Fraktionen können durch das Eindampfungsverfahren im Sinne der EU-Hygieneverordnung hygienisiert werden. Das erfindungsgemäße Verfahren eignet sich auch zur Behandlung von stickstoffbeladenen Sickerwässern oder Prozesswässern, z. B. aus der Abfall- oder Abwasserbehandlung. Hier wird durch die Volumenreduktion die Transportwürdigkeit des belasteten Wassers erhöht. Zusätzlich lassen sich die Kosten für die Stickstoffelimination dem Betrag der N-Fracht im stickstoffreichen Konzentrat einsparen, wenn diese als Stickstoffdünger vermarktet werden kann.

Durch die Eingabe kann das Volumen des Gärrestlagers, also des Gärrestkonzentrats um bis zur Hälfte gegenüber einer Anlage ohne Gärrestbehandlung reduziert werden. Das stickstoffreduzierte Konzentrat bzw. stickstoffreduzierte Kondensat kann zur Fruchtbewässerung genutzt oder abhängig von der Endkonzentration ohne weitere Kosten und unabhängig von den Sperrfristen gemäß Düngeverordnung abgeführt werden. Aus der stickstoffreichen Kondensatfraktion kann durch Zugabe von stickstoff- reduzierten Konzentrat unter Anreicherung mit fehlenden Nährstoffen, wie Kalium, ein Volldünger hergestellt werden. Entsprechend kann das flüssige Stickstoffkondensat einer besseren Vermarktung zugeführt werden.

## Patentansprüche

1. Verfahren zur Herstellung eines festen Stickstoffkonzentrats umfassend ein Verfahren zum Abtrennen von stickstoffreichen Kondensatfraktionen aus stickstoffhaltigen, Ammoniumsalze- und Ammoniak-haltigen Wässern und Schlämmen, wobei diese Wässer und Schlämme einer Eindampfung unterworfen werden, wobei das Kondensat der Eindampfung während der Eindampfung in mindestens ein stickstoffreiches und mindestens ein stickstoffarmes Kondensat fraktioniert wird, **dadurch gekennzeichnet, dass** das stickstoffreiche Kondensat aus den zuerst gebildeten Fraktionen des Kondensats der Eindampfung gebildet wird und das stickstoffreiche Kondensat aus maximal dem zuerst gebildeten 1/3 des gesamten Kondensatvolumens gebildet wird, wobei den stickstoffhaltigen Wässern oder Schlämmen vor dem Eindampfen keine Säuren und/oder Laugen hinzugefügt werden und Behandeln der erhaltenen stickstoffreichen Kondensatfraktionen mittels Membranverfahren zum Erhalt eines festen Stickstoffkonzentrats.

2. Verfahren nach Anspruch 1, wobei die stickstoffhaltigen Wässer und Schlämme solche sind, aus Gärresten, Güllen, Klärschlämmen und Sickerwässern.

3. Verfahren nach einem der vorherigen Ansprüche, wobei der Gehalt an Stickstoff im Kondensat während des Eindampfens kontinuierlich oder diskontinuierlich bestimmt wird, zur Steuerung der Fraktionierung des Kondensats in stickstoffreiche Kondensatfraktionen und stickstoffarme Kondensatfraktionen.

4. Verfahren nach einem der vorherigen Ansprüche, wobei die Fraktionierung des Kondensats beim Eindampfen zeitgesteuert und/oder temperaturgesteuert erfolgt.

5. Verfahren nach einem der vorherigen Ansprüche, wobei den stickstoffhaltigen Wässern und Schlämmen vor dem Eindampfen keine zusätzlichen chemischen Stoffe hinzugefügt werden.

6. Verfahren nach einem der Ansprüche 1 bis 5, wobei die stickstoffhaltigen Wässer und Schlämme ein Gärrest eines Gärbehälters sind und die Eindampfung in mindestens zwei Sequenzen erfolgt gegebenenfalls mit oder gefolgt von einem Hygienesierungsschritt.

7. Verfahren nach Anspruch 2, wobei die Gärreste Gärreste aus Biogas-, Schlammfaulungs-, oder Vergärungsanlagen sowie Güllelägern sind.

## Claims

1. Process for producing a solid nitrogen concentrate comprising a process for removal of nitrogen-rich condensate fractions from nitrogen-containing waters and sludges containing ammonium salts and ammonia, wherein these waters and sludges are subjected to an evaporative concentration, wherein the condensate from the evaporative concentration is fractionated into at least one nitrogen-rich condensate and at least one nitrogen-poor condensate during the evaporative concentration, **characterized in that** the nitrogen-rich condensate is formed from the initially formed fractions of the condensate from the evaporative concentration and the nitrogen-rich condensate is formed from at most the initially formed 1/3 of the total condensate volume, wherein the nitrogen-containing waters or sludges are not admixed with acids and/or alkalis before the evaporative concentration, and treatment of the obtained nitrogen-rich condensate fractions using membrane processes to obtain a solid nitrogen concentrate.

2. Process according to Claim 1, wherein the nitrogen-containing waters and sludges are from fermentation residues, liquid manures, sewage sludges and leachates.

3. Process according to any of the preceding claims, wherein the content of nitrogen in the condensate is continuously or discontinuously determined during the evaporative concentration to control the fractionation of the condensate into nitrogen-rich condensate fractions and nitrogen-poor condensate fractions.

4. Process according to any of the preceding claims, wherein the fractionation of the condensate during the evaporative concentration is time-controlled and/or temperature-controlled.

5. Process according to any of the preceding claims, wherein the nitrogen-containing waters and sludges are not admixed with additional chemical substances before the evaporative concentration.

6. Process according to any of Claims 1 to 5, wherein the nitrogen-containing waters and sludges are a fermentation residue from a fermentation vessel and the evaporative concentration is carried out in at least two sequences optionally comprising or followed by a hygienization step.

7. Process according to Claim 2, wherein the fermentation residues are fermentation residues from biogas, sludge digestion or fermentation plants and liquid manure storage means.

## Revendications

1. Procédé pour la préparation d'un concentrat solide d'azote, comprenant un procédé pour la séparation de fractions de condensat riches en azote, à partir d'eaux et de boues contenant de l'azote, contenant des sels d'ammonium et de l'ammoniaque, ces eaux et ces boues étant soumises à une concentration par évaporation, le condensat de la concentration par évaporation étant fractionné pendant la concentration par évaporation en au moins un condensat riche en azote et en au moins un condensat pauvre en azote, **caractérisé en ce que** le condensat riche en azote est formé à partir des fractions formées en premier lieu du condensat de la concentration par évaporation et le condensat riche en azote est formé par au maximum le 1/3 formé en premier lieu du volume total de condensat, les eaux ou les boues contenant de l'azote n'étant pas additionnées d'acides et/ou de bases avant la concentration par évaporation et traitement des fractions de condensat riches en azote obtenues par des procédés à membrane pour l'obtention d'un concentrat solide d'azote.

2. Procédé selon la revendication 1, les eaux et les boues contenant de l'azote étant celles provenant de résidus de fermentation, de lisier, de boues claires et d'eaux d'infiltration.

3. Procédé selon l'une quelconque des revendications précédentes, la teneur en azote dans le condensat pendant la concentration par évaporation étant déterminée en continu ou de manière discontinue pour la régulation du fractionnement du condensat en fractions de condensat riches en azote et en fractions de condensat pauvres en azote.

4. Procédé selon l'une quelconque des revendications précédentes, le fractionnement du condensat lors de la concentration par évaporation ayant lieu de manière régulée par le temps et/ou de manière régulée par la température.

5. Procédé selon l'une quelconque des revendications précédentes, les eaux et les boues contenant de l'azote n'étant pas additionnées de substances chimiques supplémentaires avant la concentration par évaporation.

6. Procédé selon l'une quelconque des revendications 1 à 5, les eaux et les boues contenant de l'azote étant un résidu de fermentation d'un récipient de fermentation et la concentration par évaporation ayant lieu en au moins deux séquences, le cas échéant conjointement avec une étape d'assainissement ou suivies par celle-ci.

7. Procédé selon la revendication 2, les résidus de fermentation étant des résidus de fermentation d'installations de biogaz, de digestion de boues, de fermentation ou de fosses à lisier.
